# FASCICULE DE BREVET EUROPEEN

(11) **EP 2 630 046 B1**
(45) Date de publication et mention de la délivrance du brevet: **10.12.2014**
(21) Numéro de dépôt: 11773083.8
(22) Date de dépôt: 14.09.2011
(51) Int. Cl.: B65D 1/02

(54) **RÉCIPIENT À PORTION ANNULAIRE CINTRÉE SURÉPAISSIE**
BEHÄLTER MIT EINEM VERDICKTEN, GEKRÜMMTEN UND RINGFÖRMIGEN TEIL
CONTAINER WITH A THICKENED CURVED ANNULAR PORTION

(30) Priorité: 20.09.2010 FR 1003730
(43) Date de publication de la demande: 28.08.2013
(73) Titulaire: Sidel Participations, 76930 Octeville sur Mer (FR)
(72) Inventeur: BELLEC, Caroline, F-76930 Octeville Sur Mer (FR); DERRIEN, Mikael, F-76930 Octeville Sur Mer (FR); FEUILLOLEY, Guy, F-76930 Octeville Sur Mer (FR); MAILLOT, Isabelle, F-76930 Octeville Sur Mer (FR)
(74) Mandataire: Demulsant, Xavier
(86) Numéro de dépôt international: PCT/FR2011/052103
(87) Numéro de publication internationale: WO 2012/038642

(56) Documents cités:
- EP-A1- 1 022 223
- EP-A1- 1 354 801
- FR-A- 1 310 475
- JP-U- 63 023 210
- US-S1- D 484 810

## Description

L'invention concerne un récipient selon le préambule de la revendication 1 et a trait à la fabrication des récipients, notamment bouteilles, flacons, par formage à partir d'ébauches (généralement des préformes, bien qu'il puisse s'agir de récipients intermédiaires) en matière plastique tel que polyéthylène téréphtalate (PET).

La fabrication des récipients comporte deux étapes principales : une étape de chauffe au cours de laquelle les ébauches sont exposées au rayonnement électromagnétique de sources émettant dans l'infrarouge, suivie d'une étape de formage au cours de laquelle un fluide (notamment un gaz) sous pression est injecté dans les ébauches ainsi chauffées pour leur donner la forme finale du récipient.

On cherche généralement à obtenir une bonne homogénéité de matière du récipient - c'est-à-dire une épaisseur de paroi sensiblement constante - de manière à assurer une bonne tenue mécanique du récipient. Toutefois, pour certaines applications on peut souhaiter atteindre cet objectif non pas en recherchant l'homogénéité de matière, mais au contraire en réalisant des surépaisseurs dans la paroi du récipient sur des zones périmétriques, comme cela est décrit dans le brevet français FR 2 703 944 (et dans son équivalent américain US 5 681 521) au nom de la demanderesse.

Dans la pratique, la tenue mécanique d'un tel récipient muni de surépaisseurs périmétriques n'est pas bien supérieure à celle d'un récipient de forme identique mais d'épaisseur constante. Cette relative médiocrité du résultat ne justifie pas les coûteuses modifications techniques de l'installation de chauffage, et en particulier, comme cela est décrit dans le brevet FR 2 703 944, la disposition de zones alternativement réfléchissantes et non réfléchissantes en regard des moyens de chauffage. Un récipient comprenant toutes les caractéristiques techniques du préambule de la revendication 1 est connu du USD 484, 810 S.

L'invention vise notamment à améliorer les performances mécaniques des récipients.

A cet effet, l'invention propose un récipient défini par la revendication 1 annexée.

On constate qu'un tel récipient présente notamment une grande résistance à l'ovalisation, ce qui permet une prise en main sans grand risque d'écrasement.

La zone annulaire cintrée peut présenter une épaisseur de paroi variable.

Les zones bulbeuses présentent par exemple une concavité tournée vers l'intérieur du récipient, tandis que les zones annulaires cintrées présentent une concavité tournée vers l'extérieur du récipient.

Selon un mode de réalisation, les zones annulaires cintrées présentent une épaisseur de paroi supérieure à celle des zones annulaires bulbeuses.

Par ailleurs, les zones annulaires cintrées peuvent présenter une extension axiale inférieure à celle des zones bulbeuses. Par exemple, le rapport entre l'extension axiale des zones annulaires cintrées et l'extension axiale des zones bulbeuses est compris entre 1 et 5.

Les zones bulbeuses peuvent présenter une épaisseur de paroi sensiblement constante.

Quant aux zones cintrées, elles peuvent présenter :
- localement, une épaisseur de paroi égale ou supérieure au double de l'épaisseur de paroi des zones bulbeuses ;
- des diamètres hors tout sensiblement égaux.

D'autres objets et avantages de l'invention apparaîtront à la lumière de la description faite ci-après en référence aux dessins annexés dans lesquels :
- la figure 1 est une vue en perspective illustrant partiellement une unité de chauffe comprenant une paroi tapissée de sources infrarouge ponctuelles, devant laquelle défilent des préformes ;
- la figure 2 est une vue de face de l'unité de chauffe de la figure 1 ;
- la figure 3 est une vue de l'unité de chauffe de la figure 2, en coupe transversale selon le plan de coupe III-III ;
- la figure 4 est un schéma montrant, au centre, une préforme chauffée de manière sélective, sur la gauche, un diagramme illustrant le profil de l'intensité rayonnée par les sources en regard de la préforme et, sur la droite, un thermogramme illustrant les variations de la température de la préforme ;
- la figure 5 est une vue en coupe montrant, en pointillés, la préforme et, en traits pleins le récipient formé ; des encarts montrent certains détails de la paroi du récipient, à échelle agrandie ;
- la figure 6 est une vue en coupe montrant une variante de réalisation du récipient.

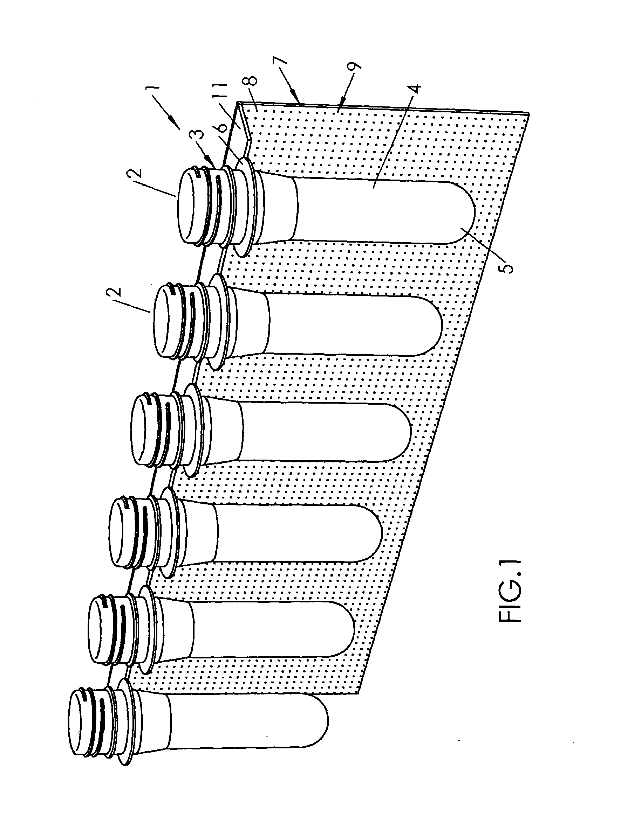

Sur les figures 1 à 3 est schématiquement représentée une unité 1 de chauffe d'ébauches 2 de récipients au défilé. Les ébauches 2 sont en l'occurrence des préformes, mais il pourrait s'agir de récipients intermédiaires ayant subi des opérations temporaires de formage et destinées à subir une ou plusieurs opérations subséquentes pour l'obtention des récipients définitifs.

Chaque préforme 2, réalisée dans une matière thermoplastique telle que polyéthylène téréphtalate (PET), comprend un col 3, qui n'est pas (ou peu) soumis à la chauffe et dont la forme est définitive, et un corps **4** qui se termine, à l'opposé du col **3,** par un fond **5** hémisphérique.

A la jonction entre le col **3** et le corps **4**, la préforme **2** présente une collerette **6** par laquelle la préforme **2** est suspendue à diverses étapes de la fabrication du récipient.

Dans l'unité **1** de chauffe toutefois, les préformes **2** sont fixées à des supports pivotants appelés tournettes, qui entraînent les préformes **2** en rotation autour de leur axe **A** principal de manière à exposer l'ensemble du corps **4** à la chauffe.

Sur les figures 1 à 3, on a représenté les préformes **2** col **3** en haut, mais cette représentation est arbitraire et illustrative, et les préformes 2 pourraient être orientées col **2** en bas.

L'unité 1 de chauffe présente une paroi **7** rayonnante en regard de laquelle défilent les préformes **2**. Cette paroi **7** est tapissée d'une pluralité de sources **8** de rayonnement électromagnétique émettant de manière à la fois monochromatique (ou pseudo-monochromatique), et directive vers les préformes **2**, dans le domaine de l'infrarouge.

En théorie, une source monochromatique est une source idéale émettant une onde sinusoïdale de fréquence unique. En d'autres termes, son spectre en fréquence est constitué d'une seule raie de largeur spectrale nulle (Dirac).

Dans la pratique, une telle source n'existe pas, une source réelle étant au mieux quasi-monochromatique, c'est-à-dire que son spectre en fréquence s'étend sur une bande de largeur spectrale faible mais non nulle, centrée sur une fréquence principale où l'intensité du rayonnement est maximale. Dans la présente description, une telle source réelle est dite monochromatique.

Par ailleurs, dans la présente description, on qualifie de « pseudo-monochromatique » une source émettant de manière quasi-monochromatique sur un spectre discret comprenant plusieurs bandes étroites centrées sur des fréquences principales distinctes. On parle également de source multimodes.

En pratique, les sources **8** sont des diodes laser infrarouge organisées par juxtaposition et superposition pour former une matrice **9.** Selon un mode préféré de réalisation, la matrice **9** est une matrice de diodes **8** laser à cavité verticale émettant par la surface (VCSEL), chaque diode **8** émettant par exemple un faisceau **10** laser d'une puissance unitaire nominale de l'ordre du Watt à une longueur d'onde située dans la plage des infrarouges courts et moyens - par exemple de l'ordre de 1 µm.

A l'échelle des préformes, les diodes **8** peuvent être considérées comme des sources ponctuelles, qui émettent chacune un rayonnement directif, c'est-à-dire sous forme d'un faisceau **10** lumineux dont le demi-angle solide au sommet est fermé, et de préférence compris entre 10° et 60°. Le faisceau **10** peut être symétrique de révolution (i.e. à section circulaire), ou non symétrique de révolution (par exemple à section elliptique).

L'objet de la présente demande n'est pas de décrire en détail la structure de la matrice **9** de diodes **8.** C'est pourquoi on a représenté la matrice **9** de manière simplifiée, sous forme d'une plaque, les diodes **8** apparaissant sous forme de points.

L'unité **1** de chauffe est conçue pour permettre une modulation de la puissance (on parle également de l'intensité) du rayonnement émis par chaque diode **8,** ou par groupes de diodes.

En l'occurrence, la matrice **9** est subdivisée en plusieurs zones **9A, 9B,...,9I** superposées, regroupant chacune plusieurs lignes de diodes **8** dont la puissance est identique et modulée simultanément. Une telle modulation peut être réalisée par voie électronique, la puissance des diodes **8** de chaque zone **9A, 9B,...,9I** étant par exemple visualisée sur un moniteur de contrôle. Ce moniteur peut être tactile et afficher, pour chaque zone, un curseur dont le glissement provoque la modulation de la puissance du rayonnement émis par les diodes **8** de la zone **9A, 9B,...,9I** à une valeur comprise entre une valeur Pₘᵢₙ minimale prédéterminée (par exemple nulle) et une valeur Pₘₐₓ maximale correspondant par exemple à la puissance nominale des diodes **8.**

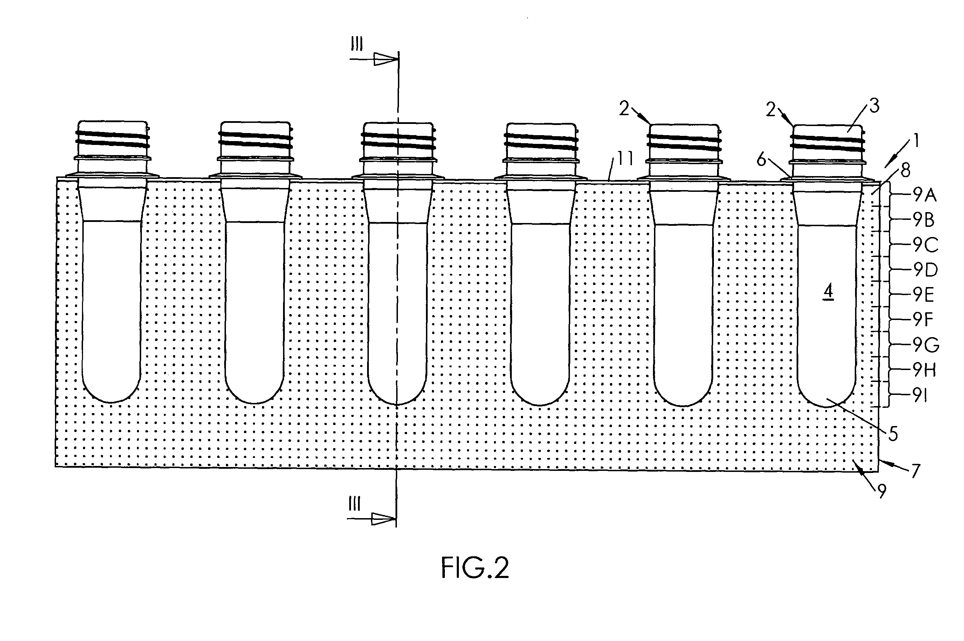

On a représenté sur la figure 2 un cas particulier de subdivision de la matrice **9** en zones **9A, 9B,...,9I** superposées de hauteurs égales, matérialisées sur la figure par les accolades visibles sur la droite. On voit sur le dessin que le corps **4** de la préforme **2** est d'une hauteur inférieure à celle de la matrice **9,** qui est en effet adaptée à la chauffe de préformes **2** de hauteurs variées. Aussi, on n'a matérialisé sur la figure que les zones **9A, 9B,...,9I** actives situées en regard de la préforme **2,** et dont le rayonnement est susceptible d'atteindre celle-ci, les zones situées au-dessous étant considérées comme inactives, c'est-à-dire, soit qu'elles sont complètement éteintes, soit, lorsque la valeur Pₘᵢₙ minimale n'est pas nulle, que leur puissance est, par défaut, réglée à cette valeur minimale. Arbitrairement, à des fins de lisibilité on a représenté sur les figures 1 à 3 une faible densité de diodes **8,** telle que chaque zone **9A, 9B,...,9I** ne comprend que trois lignes de diodes **8.** En pratique, la densité de diodes sur une plaque VCSEL est bien supérieure, et chaque zone **9A, 9B,...,9I** peut comprendre un nombre de lignes de diodes **8** bien supérieur à trois.

On souhaite procéder à une chauffe sélective de chaque préforme 2, de manière à obtenir des variations de la température de paroi du corps **4** suivant son axe **A** et, plus précisément, une alternance de régions **4A, 4B,...,4I** annulaires (ou tranches) chaudes et froides.

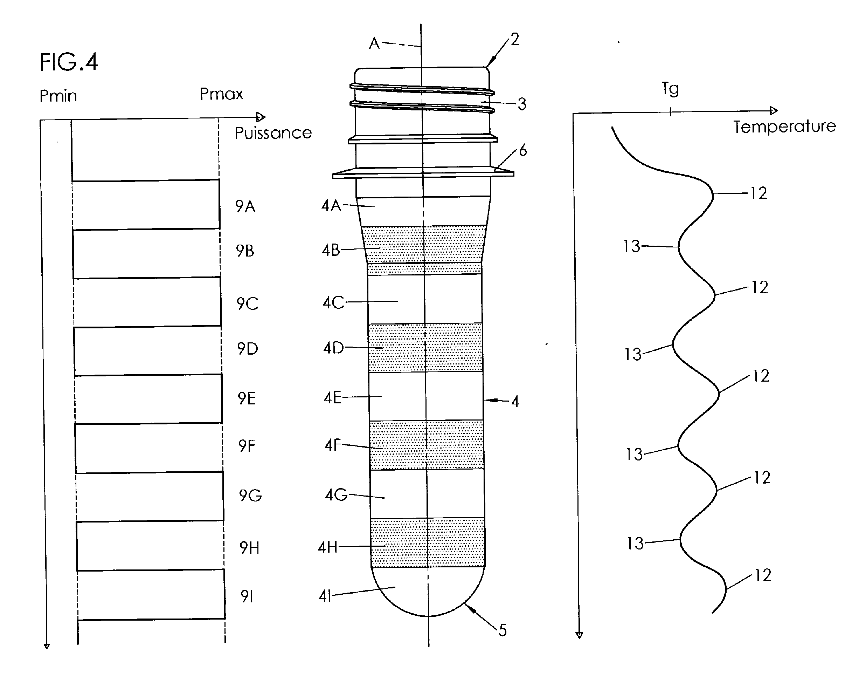

A cet effet, on règle la puissance des zones **9A, 9B,...,9I** alternativement à une valeur élevée (égale au maximum ou voisine de celui-ci, c'est-à-dire avec une atténuation de 10 ou 20%) et à une valeur faible (égale au minimum ou voisine de celui-ci, c'est-à-dire avec une majoration de 10 ou 20%), en veillant à ce que la zone **9A** supérieure, située en regard de la région sous col du corps **4** et la zone **91** inférieure, située en regard du fond, soient réglées à la valeur élevée. On qualifie de « allumées » les diodes **8** et les zones dont la puissance des diodes **8** est réglée à la valeur élevée, et de « éteintes » les diodes **8** et les zones dont la puissance des diodes **8** est réglée à la valeur faible. Le diagramme de puissance est visible à gauche sur la figure 4. On voit que ce diagramme est crénelé.

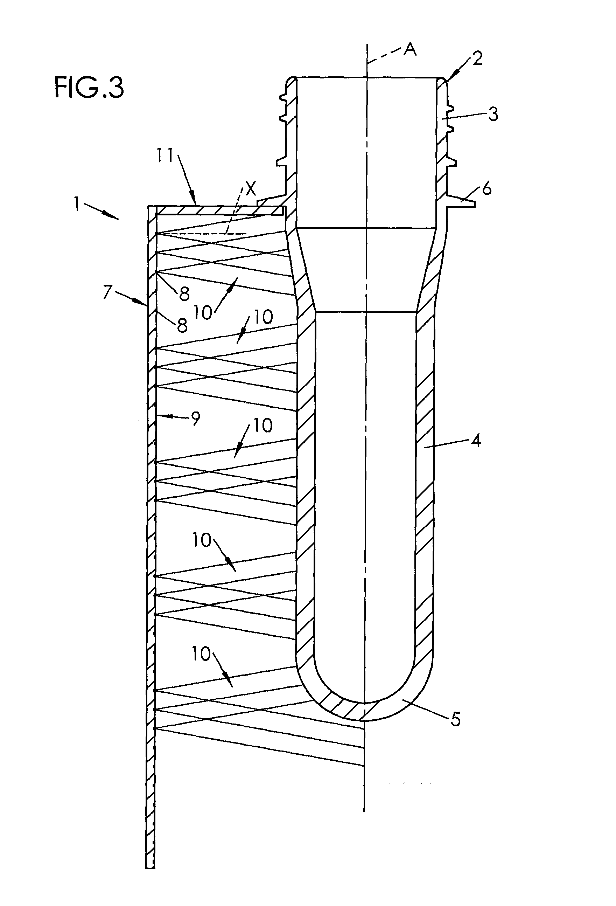

Ce réglage est également illustré sur la figure 3, où l'on a représenté les faisceaux **10** lumineux émis par les diodes **8** des zones **9A, 9C, 9E, 9G, 91** allumées, les diodes **8** éteintes étant considérées comme n'émettant aucun rayonnement, ou un rayonnement trop faible pour être pris en considération.

On voit que, malgré la divergence des faisceaux **10** lumineux émis par chaque diode, rayonnant autour d'un axe **X** correspondant à la bissectrice de l'angle solide du faisceau **10** (cette bissectrice est perpendiculaire à la face interne de la matrice 9 et à l'axe **A** de la préforme **2),** des tranches **4B, 4D, 4F, 4H** du corps **4** ne sont pas soumises au rayonnement direct de la matrice **9.** On qualifie de « éclairée » une tranche **4A, 4C, 4E, 4G, 41** du corps **4** soumise au rayonnement direct des diodes **8,** et de « non éclairée » une tranche **4B, 4D, 4F, 4H** du corps **4** qui n'est pas soumise au rayonnement direct des diodes **8,** ou qui est soumise à un rayonnement faible, marginal de diodes **8** qui ne sont pas situées en regard de cette tranche, et dont la répartition de puissance est gaussienne.

Si l'on considère comme négligeables les effets optiques liés à la préforme **2** elle-même, (diffraction, diffusion, réflexion), la présence effective de tranches **4B, 4D, 4F, 4H** non éclairées dépend de plusieurs paramètres réglables, notamment :
- l'angle solide des faisceaux **10** lumineux,
- la hauteur des zones **9A, 9C, 9E, 9G, 91** allumées et la hauteur des zones **9B, 9D, 9F, 9H** éteintes (correspondant à l'écartement entre les zones **9A, 9C, 9E, 9G, 91** allumées),
- la distance de la préforme **2** à la matrice **9,**
- la présence éventuelle de réflecteurs en regard de la matrice **9.**

En outre, la présence éventuelle de réflecteurs en regard de la matrice **9** peut également avoir une influence sur la répartition du rayonnement le long de la préforme 2.

L'homme du métier peut ainsi régler ces facteurs pour obtenir l'alternance souhaitée de tranches **4A, 4C, 4E, 4G, 41** éclairées et de tranches **4B, 4D, 4F, 4H** non éclairées.

Dans l'exemple illustré sur la figure 3, l'angle solide des diodes **8** allumées est de 22° environ ; la hauteur des zones **9A-9I** (allumées ou éteintes) et la distance de la préforme **2** à la matrice **9** sont telles qu'une alternance de tranches **4A, 4C, 4E, 4G, 41** éclairées et de tranches **4B, 4D, 4F, 4H** non éclairées apparaît sur le corps. Une plaque **11** absorbante (ou réfléchissante) est disposée horizontalement dans l'interstice entre la paroi **7** rayonnante et les préformes **2,** au niveau de la collerette **6,** pour préserver le col **4** du rayonnement infrarouge.

Compte tenu de la divergence des faisceaux **10** des diodes **8** allumées, ceux-ci se chevauchent et se combinent pour former, pour chaque zone **9A, 9C, 9E, 9G, 91** allumée, un faisceau multiple dont la répartition de puissance est du type gaussien : maximale au centre et diminuant progressivement sur les bords. C'est pourquoi la puissance du rayonnement effectivement reçu par la préforme **2** ne correspond pas exactement à celle du diagramme représenté à gauche sur la figure 4, mais présente des variations continues entre :
- des maxima, localisés en des points centraux des tranches **4A, 4C, 4E, 4G, 41** éclairées, situés au droit des lignes médianes des zones **9A, 9C, 9E, 9G, 91** allumées correspondantes, et
- des minima, localisés en des points centraux des tranches **4B, 4D, 4F, 4H** non éclairées, situés au droit de lignes médianes des zones **9B, 9D, 9F, 9H** éteintes correspondantes.

On a représenté sur la préforme **2** de la figure 4, en regard du diagramme de puissance situé à gauche, les tranches **4B, 4D, 4F, 4H** non éclairées en grisé, et les tranches **4A, 4C, 4E, 4G, 41** éclairées en blanc. Comme cela est visible sur le dessin, les tranches éclairées et non éclairées alternent le long de l'axe **A** du corps **4.** On comprendra, à la lumière des explications qui précèdent, que ce dessin est schématique. En effet, l'alternance des tranches éclairées et non éclairées n'est pas aussi nette puisque la variation du rayonnement reçu par la préforme 2 est continue.

Sur le diagramme de droite de la figure 4, en regard de la préforme, un thermogramme représente les variations de la température de paroi du corps **4,** telle qu'exposé au rayonnement infrarouge du diagramme situé à gauche de la figure. Ce diagramme est représentatif de la puissance de rayonnement effectivement absorbée par la préforme **2.** On constate que le thermogramme présente un profil sensiblement sinusoïdal, avec une alternance de pics **12** (c'est-à-dire de maxima) correspondant aux centres des tranches **4A, 4C, 4E, 4G, 41** éclairées, et de creux **13** (c'est-à-dire de minima) correspondant aux centres des tranches **4B, 4D, 4F, 4H** non éclairées.

Selon le type de diode retenu (c'est-à-dire selon la puissance nominale des diodes **8** et l'angle solide du faisceau **10),** les réglages de puissance des zones **9A, 9C, 9E, 9G, 91** allumées et de distance de la préforme **2** à la matrice **9** sont choisis pour que la température correspondant aux pics **12** soit très supérieure à la température de transition vitreuse de la matière (qui est d'environ 80°C dans le cas du PET), et la température correspondant aux creux **13** soit supérieure à la température T_{g} de transition vitreuse, mais voisine de celle-ci.

L'expression « très supérieure » signifie que la température de pic **12** est supérieure d'au moins 20% à la température de transition vitreuse ; le terme « voisine » signifie que la température de creux **13** n'est pas supérieure de 10% à la température de transition vitreuse. Par ailleurs, le col 3 n'étant pas éclairé (ou très peu, puisqu'isolé par la plaque), la température de paroi y est faible, c'est-à-dire voisine de la température ambiante.

Ainsi, à l'issue de la chauffe le corps **4** de la préforme **2** présente une alternance de tranches chaudes (correspondant aux tranches **4A, 4C, 4E, 4G, 41** éclairées), dont la température de paroi (mesurée sensiblement sur une ligne médiane de la tranche) est très supérieure à la température de transition vitreuse de la matière, et de tranches comparativement plus froides (correspondant aux tranches **4B, 4D, 4F, 4H** non éclairées), dont la température (également mesurée sensiblement sur une ligne médiane de la tranche) est voisine de la température T_{g} de transition vitreuse. En d'autres termes, le corps **4** présente une alternance de tranches dont la déformabilité est élevée (les tranches chaudes) en raison de la température très supérieure à la température de transition vitreuse, et de tranches dont la déformabilité est faible (les tranches froides), en raison de la température voisine de la température de transition vitreuse.

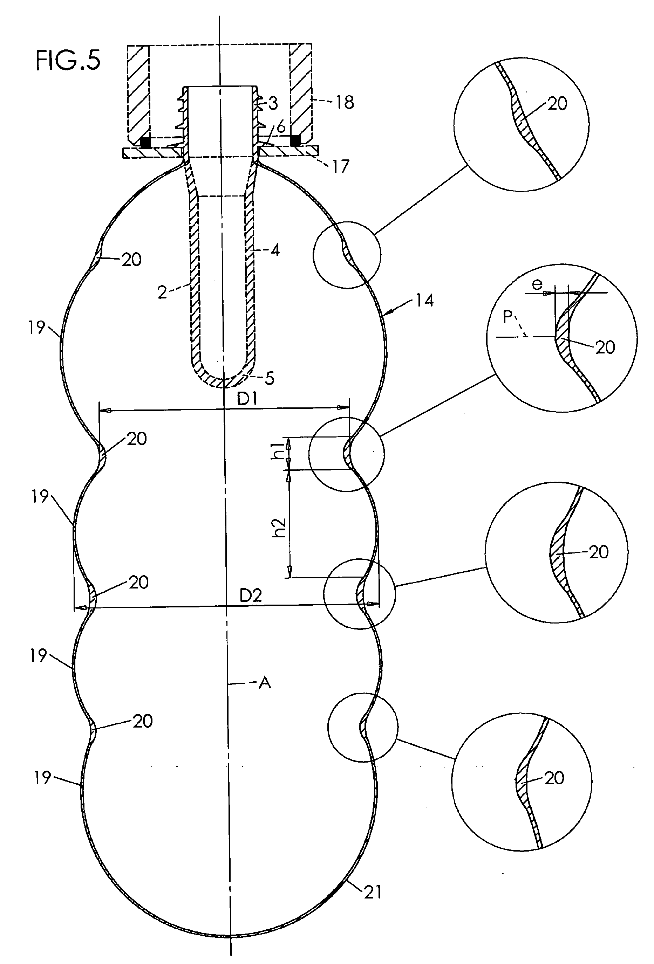

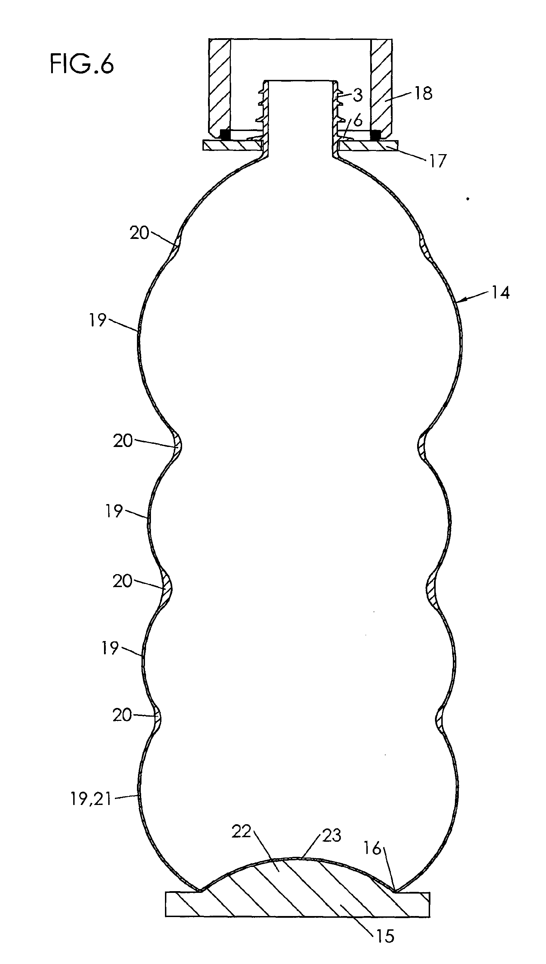

Une préforme **2** ainsi chauffée révèle des résultats surprenants lorsque le formage d'un récipient **14** est réalisé en expansion libre, c'est-à-dire qu'il n'est pas effectué au sein d'un moule muni d'une paroi latérale à l'empreinte d'un récipient. En pratique, le soufflage peut être :
- complètement libre (figure 5), c'est-à-dire sans aucune surface de guidage latérale ou inférieure contre laquelle pourrait venir s'appliquer la matière lors du formage, que ce soit au niveau du corps **4** ou du fond **5** du récipient **14,** ou
- partiellement libre, c'est-à-dire, malgré l'absence de toute paroi à l'empreinte du récipient, avec une surface contre laquelle le récipient peut localement prendre appui, tel que :
   - un calibre cylindrique assurant le guidage axial et la limitation du diamètre de la bulle en développement, ou encore
   - un fond **15** de moule configuré pour former sur le fond 5 du récipient une assise **16** (par exemple annulaire, comme illustré sur la figure 6) destinée à assurer la stabilité du récipient **14** posé sur une surface plane.

En pratique, la préforme **2** chaude est simplement montée sur un support **17** auquel elle est suspendue par sa collerette **6.** Puis un fluide sous pression (par exemple un gaz tel que de l'air, ou encore un liquide) est injecté dans la préforme **2** au moyen d'une tuyère **18** qui vient recouvrir le col **3** en venant s'appliquer de manière étanche sur le support. L'injection du fluide, à une pression convenable, provoque le soufflage du récipient **14.**

On voit que ce récipient **14** final présente une alternance de zones **19** annulaires bulbeuses (ci-après dénommés bulbes), à concavité tournée vers l'intérieur du récipient **14,** et de zones **20** annulaires cintrées (ou rétrécies, ci-après dénommées ceintures) à concavité tournée vers l'extérieur, dont le diamètre hors tout est inférieur à celui des bulbes **19.** On note par conséquent une inversion de la courbure de la paroi du récipient **14** entre les bulbes **19** et les ceintures **20.**

On voit sur la figure 5, et plus précisément sur les vues de détail sur la droite, que :
- les ceintures **20** présentent une épaisseur de paroi supérieure à celle des bulbes **19,**
- les ceintures **20** présentent une extension axiale ou hauteur **h1** très inférieure à celle **h2** des bulbes, dans un rapport de 1 à 3 au moins (dans la partie inférieure du récipient **14** sur les figures), voire 1 à 5 (dans la partie supérieure du récipient **14**) ;
- l'épaisseur de paroi des bulbes **19** est sensiblement constante ;
- a contrario, l'épaisseur de paroi des ceintures **20** est variable, les ceintures **20** présentant en section radiale une forme de croissant de lune, avec une épaisseur e maximale dans un plan **P** médian perpendiculaire à l'axe **A** du corps **4 ;**
- l'épaisseur de paroi du récipient **14** au niveau du plan **P** médian des ceintures **20** est égale ou supérieure au double de l'épaisseur de paroi au niveau des bulbes **19** ;
- les ceintures **20** présentent toutes des diamètres **D1** hors tout sensiblement égaux ;
- de même les bulbes présentent, à l'exception du col, des diamètres **D2** hors tout sensiblement égaux, supérieurs à ceux des ceintures.

Les bulbes **19** correspondent aux tranches **4A, 4C, 4E, 4G, 41** chaudes de la préforme, à déformabilité élevée ; les ceintures **20** correspondent aux tranches **4B, 4D, 4F, 4H** froides, à faible déformabilité.

On constate lors du soufflage que les tranches **4B, 4D, 4F, 4H** froides (devenant les ceintures **20)** agissent à la manière d'un guide axial pour le développement de la bulle qui, par déformation de la préforme **2** sous la pression du fluide injecté par le col 3, donne progressivement sa forme au récipient **14** final. En effet, à mesure que la bulle se déploie, les ceintures **20** conservent leur assiette, c'est-à-dire qu'elles se maintiennent dans des plans perpendiculaires à l'axe **A** principal du corps **4** de la préforme **2,** tout en s'écartant axialement les unes des autres à mesure que se développent les bulbes **19** qui les séparent progressivement.

Les tranches **4B, 4D, 4F, 4H** froides sont suffisamment déformables pour s'étirer convenablement radialement sous une pression moyenne (inférieure à 10 bars, voire environ 5 bars), et l'on constate, comme cela est illustré sur les figures 5 et 6, que l'augmentation du diamètre de la préforme **2** au niveau des ceintures **20** est assez important.

En revanche, compte tenu de leur température de matière voisine de la température T_{g} de transition vitreuse, les tranches **4B, 4D, 4F, 4H** froides ne sont pas suffisamment déformables pour s'étirer de manière sensible axialement. De fait, l'étirage axial est faible, inférieur à 50% (c'est-à-dire que les ceintures **20** du récipient présentent une hauteur inférieure à 1,5 fois la hauteur des tranches **4B, 4D, 4F, 4H** froides de la préforme **2**). On constate que l'épaisseur de paroi du récipient **14** au niveau des ceintures **20** est sensiblement égale (en fait à peine inférieure) à l'épaisseur de paroi de la préforme **2.**

In fine, la matière des ceintures **20** du récipient final est essentiellement mono-orientée dans la direction radiale, tandis que la matière des bulbes **20** est bi-orientée, à la fois radialement et axialement.

Le rapport **D1/D2** entre les diamètres **D1** des ceintures **20** et les diamètres **D2** des bulbes est compris entre 3/5 (notamment dans la partie supérieure du récipient **14,** au niveau du col) et 4/5 (notamment dans la partie inférieure du récipient **14).**

Comme nous l'avons vu, le soufflage peut être totalement libre (figure 5), le récipient **14** présentant alors un fond **21** en forme de calotte sphérique en raison de son développement non contraint par une quelconque paroi.

Le soufflage peut également être partiellement libre (figure 6), le fond **21** du récipient **14** étant conformé au moyen d'un fond de moule **15** disposé dans l'axe **A** de la préforme **2** et contre lequel la matière vient s'appliquer en fin de soufflage. Dans l'exemple illustré, le fond de moule **15** présente une portion **22** centrale bombée (par exemple en forme de calotte sphérique) de manière à former sur le fond **21** du récipient une voûte **23** concave en saillie vers l'intérieur du récipient **14,** et dont la périphérie forme une assise **16** annulaire par laquelle le récipient **14** peut reposer de manière stable sur une surface plane telle qu'une table.

On récapitule ci-après les avantages notoires du procédé décrit ci-dessus, et de ses résultats.

Premièrement, la chauffe sélective de la préforme **2** par rayonnement infrarouge de sources monochromatiques directives (tel que laser) est suffisamment précise pour obtenir des variations de température marquées entre des tranches alternativement chaudes et froides bien délimitées, contrairement à une chauffe classique telle que décrite dans le brevet français FR 2 703 944 précité où les variations de température sont extrêmement progressives. Comme nous l'avons vu, il est même possible de ne pas éclairer du tout certaines tranches de la préforme **2,** qui, bien que s'échauffant par conduction thermique au voisinage des tranches éclairées, ne s'échauffent qu'à une température contrôlée à peine supérieure à la température T_{g} de transition vitreuse de la matière. La faible déformabilité de ces tranches **4B, 4D, 4F, 4H** froides, associée à l'alternance de tranches **4B, 4D, 4F, 4H** froides et de tranches **4A, 4C, 4E, 4G, 41** chaudes sur la préforme **2,** permet d'assurer, lors du soufflage libre, un guidage axial précis de la bulle en expansion, sans déviation notable. Tel n'est pas le cas dans les soufflages libres ordinaires, tel que décrit dans le brevet français FR 2 848 906 (Sidel), où l'on note souvent des déviations de la bulle hors de l'axe, ce qui conduit à des récipients de forme non contrôlée (le plus souvent en forme générale de haricot).

Deuxièmement, le soufflage libre ne se fait pas au détriment de la rigidité structurelle du récipient **14.** De fait, la rigidité du récipient **14** décrit ci-dessus et illustré sur les figures 5 et 6 est exceptionnelle. Elle provient :
- d'abord, de la forme annelée du récipient **14**, avec son alternance de bulbes **19** et de ceintures **20** ;
- des surépaisseurs de matière au niveau des ceintures **20**, dont la résistance à la déformation (notamment à l'ovalisation) est très élevée ;
- des formes géométriques des bulbes **19**, dont le développement non contraint conduit à une forme sphérique naturellement stable et résistante (notamment dans la direction axiale).

Les essais le démontrent : la force d'écrasement nécessaire pour provoquer une déformation (notamment une ovalisation) du récipient **14** est très supérieure à la force ordinaire de prise en main du récipient **14** pour une utilisation normale (manipulation, stockage, débouchage, vidange). Le récipient **14** ainsi obtenu constitue une avancée majeure par rapport aux récipients obtenus par un soufflage libre ordinaire tel que décrit dans le brevet français FR 2 848 906 précité, dans lequel la stabilité mécanique des récipients est très faible, la moindre prise en main provoquant l'enfoncement de la paroi.

Troisièmement, comme le démontrent les essais, grâce à la précision de la chauffe sélective, l'ensemble du processus de fabrication des récipients présente une excellente répétabilité, les éventuelles différences pouvant exister entre deux récipients **14** issus du même processus (avec des réglages identiques de rayonnement et de pression de soufflage) étant imperceptibles à l'oeil nu. On ne déplore donc aucune perte de qualité perçue en comparaison du soufflage réalisé en moule, le procédé étant par conséquent industrialisable à grande échelle.

Quatrièmement, compte tenu du coût des moules et du temps passé à leur conception, leur installation et leur maintenance, l'absence de moule permet de réaliser de substantielles économies. Cet avantage apparaît latent dans le soufflage libre connu évoqué ci-dessus, mais les défauts d'aspect du récipient, inhérents au procédé employé, le limitaient à certains marchés où l'aspect du contenant n'est pas primordial. Au contraire, avec le procédé décrit ci-dessus, les récipients obtenus présentent un aspect qui, s'il peut faire l'objet de perfectionnements, est acceptable en tous points du globe, y compris sur les marchés où l'aspect du contenant est primordial.

Cinquièmement, comme nous l'avons vu, le formage peut être réalisé à des pressions moyennes (inférieures à 10 bars, et même d'environ 5 bars), qui sont très inférieures aux pressions élevées (supérieures à 20 bars) requises lorsque le formage est réalisé dans un moule (à défaut de quoi la prise de forme du récipient contre la paroi du moule n'est pas complète). Il en résulte de substantielles économies d'énergie, le soufflage pouvant être réalisé à partir de l'alimentation pneumatique ordinaire à 7 bars que l'on peut éventuellement détendre, tandis que le formage ordinaire requiert des lignes pneumatiques dédiées, consommatrices d'énergie et nécessitant de rigoureuses mesures de sécurité.

## Revendications

1. Récipient **(14)** en matière thermoplastique présentant un corps s'étendant suivant un axe **(A)** principal, comprenant une alternance de zones **(19)** annulaires bulbeuses et de zones **(20)** annulaires cintrées dont le diamètre hors tout est inférieur à celui des zones **(19)** bulbeuses, **caracterisé en ce que** les zones annulaires cintrées sont surépaissies.

2. Récipient **(14)** selon la revendication 1, **caractérisé en ce que** la zone **(20)** annulaire cintrée présente une épaisseur de paroi variable.

3. Récipient **(14)** selon la revendication 1 ou 2, **caractérisé en ce que** les zones **(19)** bulbeuses présentent une concavité tournée vers l'intérieur du récipient, tandis que les zones **(20)** cintrées présentent une concavité tournée vers l'extérieur du récipient **(14).**

4. Récipient **(14)** selon l'une des revendications 1 à 3, **caractérisé en ce que** les zones **(20)** cintrées présentent une épaisseur de paroi supérieure à celle des zones **(19)** bulbeuses.

5. Récipient **(14)** selon l'une des revendications 1 à 4, **caractérisé en ce que** les zones **(20)** cintrées présentent une extension axiale inférieure à celle des zones **(19)** bulbeuses.

6. Récipient **(14)** selon la revendication 5, **caractérisé en ce que** le rapport entre l'extension axiale des zones **(20)** cintrées et l'extension axiale des zones **(19)** bulbeuses est compris entre 1 et 5.

7. Récipient **(14)** selon l'une des revendications 1 à 6, **caractérisé en ce que** les zones **(19)** bulbeuses présentent une épaisseur de paroi sensiblement constante.

8. Récipient **(14)** selon l'une des revendications 1 à 7, **caractérisé en ce que** les zones **(20)** cintrées présentent localement une épaisseur de paroi égale ou supérieure au double de l'épaisseur de paroi des zones **(19)** bulbeuses.

9. Récipient **(14)** selon l'une des revendications 1 à 8, **caractérisé en ce que** les zones **(20)** cintrées présentent des diamètres hors tout sensiblement égaux.

## Patentansprüche

1. Behälter (14) aus thermoplastischem Material, der einen sich entlang einer Hauptachse (A) erstreckenden Körper aufweist, umfassend abwechselnd knollenförmige, ringförmige Zonen (19) und gekrümmte, ringförmige Zonen (20), deren Gesamtdurchmesser kleiner ist als der der knollenförmigen Zonen (19), **dadurch gekennzeichnet, dass** die gekrümmten, ringförmigen Zonen verdickt sind.

2. Behälter (14) nach Anspruch 1, **dadurch gekennzeichnet, dass** die gekrümmte, ringförmige Zone (20) eine variable Wanddicke aufweist.

3. Behälter (14) nach Anspruch 1 oder 2, **dadurch gekennzeichnet, dass** die knollenförmigen Zonen (19) eine zum Inneren des Behälters weisende Konkavität aufweisen, während die gekrümmten Zonen (20) eine zum Äußeren des Behälters (14) weisende Konkavität aufweisen.

4. Behälter (14) nach einem der Ansprüche 1 bis 3, **dadurch gekennzeichnet, dass** die gekrümmten Zonen (20) eine größere Wanddicke als die knollenförmigen Zonen (19) aufweisen.

5. Behälter (14) nach einem der Ansprüche 1 bis 4, **dadurch gekennzeichnet, dass** die gekrümmten Zonen (20) eine kleinere axiale Erstreckung als die knollenförmigen Zonen (19) aufweisen.

6. Behälter (14) nach Anspruch 5, **dadurch gekennzeichnet, dass** das Verhältnis zwischen der axialen Erstreckung der gekrümmten Zonen (20) und der axialen Erstreckung der knollenförmigen Zonen (19) zwischen 1 und 5 liegt.

7. Behälter (14) nach einem der Ansprüche 1 bis 6, **dadurch gekennzeichnet, dass** die knollenförmigen Zonen (19) eine im Wesentlichen konstante Wanddicke aufweisen.

8. Behälter (14) nach einem der Ansprüche 1 bis 7, **dadurch gekennzeichnet, dass** die gekrümmten Zonen (20) lokal eine Wanddicke von größer gleich dem Doppelten der Wanddicke der knollenförmigen Zonen (19) aufweisen.

9. Behälter (14) nach einem der Ansprüche 1 bis 8, **dadurch gekennzeichnet, dass** die gekrümmten Zonen (20) im Wesentlichen gleiche Gesamtdurchmesser aufweisen.

## Claims

1. Thermoplastic container (14) having a body extending along a main axis (A), comprising an alternating arrangement of bulbous annular regions (19) and waisted annular regions (20) whose overall diameter is less than that of the bulbous regions (19), **characterized in that** the waisted annular regions are thickened.

2. Container (14) according to Claim 1, **characterized in that** the waisted annular region (20) has a variable wall thickness.

3. Container (14) according to Claim 1 or 2, **characterized in that** the bulbous regions (19) have a concavity facing the interior of the container while the waisted regions (20) have a concavity facing the exterior of the container (14).

4. Container (14) according to one of Claims 1 to 3, **characterized in that** the waisted regions (20) have a wall thickness greater than that of the bulbous regions (19).

5. Container (14) according to one of Claims 1 to 4, **characterized in that** the waisted regions (20) have an axial extension which is less than that of the bulbous regions (19).

6. Container (14) according to Claim 5, **characterized in that** the ratio between the axial extension of the waisted regions (20) and the axial extension of the bulbous regions (19) is between 1 and 5.

7. Container (14) according to one of Claims 1 to 6, **characterized in that** the bulbous regions (19) have a substantially constant wall thickness.

8. Container (14) according to one of Claims 1 to 7, **characterized in that** the waisted regions (20) locally have a wall thickness which is equal to or greater than twice the wall thickness of the bulbous regions (19).

9. Container (14) according to one of Claims 1 to 8, **characterized in that** the waisted regions (20) have substantially equal overall diameters.
